# EUROPEAN PATENT APPLICATION

(11) **EP 3 832 554 A1**
(43) Date of publication of application: **09.06.2021**
(21) Application number: 20195474.0
(22) Date of filing: 10.09.2020
(51) Int. Cl.: G06N 10/00, G06F 9/38, G06F 9/30

(54) **PARALLEL STREAMING APPARATUS AND METHOD FOR A FAULT TOLERANT QUANTUM COMPUTER**

(30) Priority: 06.12.2019 US 201916706550
(71) Applicant: INTEL Corporation, Santa Clara, CA 95054 (US)
(72) Inventor: ZOU, Xiang, Portland, Oregon 97229 (US); HOGABOAM, Justin, Aloha, Oregon 97007 (US); PREMARATNE, Shavindra, Portland, Oregon 97229 (US); KHAMMASSI, Nader, Hillsboro, Oregon 97124 (US)
(74) Representative: HGF

(57) **Abstract**

Parallel streaming apparatus and method for parallel quantum computations. For example, one embodiment of a processor comprises: a memory interface coupled to a system memory; and a plurality of streaming multi-processors, each streaming multiprocessor to execute a plurality of instruction streams in parallel, the instruction streams including quantum instructions, each streaming multiprocessor comprising: an instruction cache to store a first plurality of the quantum instructions fetched from the memory; instruction issue circuitry to dispatch each quantum instruction of the first plurality for execution; a plurality of parallel quantum execution circuits, each parallel quantum execution circuit to execute a subset of the first plurality of quantum instructions, two or more of the first plurality of quantum instructions to be executed in parallel by a corresponding two or more of the parallel quantum execution circuits; and a plurality of wave generators to receive signals from the plurality of parallel quantum execution circuits responsive to execution of each of the first plurality of quantum instructions, the wave generators to responsively generate analog waveforms to control qubits of a quantum processor.

## Description

### BACKGROUND

### Field of the Invention

The embodiments of the invention relate generally to the field of quantum computing. More particularly, these embodiments relate to a parallel streaming apparatus and method for a fault tolerant quantum computer.

### Description of the Related Art

Quantum computing refers to the field of research related to computation systems that use quantum mechanical phenomena to manipulate data. These quantum mechanical phenomena, such as superposition (in which a quantum variable can simultaneously exist in multiple different states) and entanglement (in which multiple quantum variables have related states irrespective of the distance between them in space or time), do not have analogs in the world of classical computing, and thus cannot be implemented with classical computing devices.

A quantum computer changes state by focusing an external stimuli from an RF pulse or laser pulse on an individual or group of two or more qubits. Dynamic control of qubit state changes is not controlled by the flow of electricity through a complex network of transistors at each clock cycle as in the classical case, but is instead coordinated by the individual pulsing actions of a dynamic control system.

In analogy with classical computing, it is like having a central controller system that triggers a state change for each individual transistor in the electrical network as computation proceeds. This central controller would need to receive instructions on whether to flip the transistor or keep it steady state during this clock cycle.

Things get more complicated for quantum computing because the controlled state change is not merely a bit flip from a 0 state to a 1 state or vice-versa. Rather, there are in-between quantum states that are a linear combination of both the 0 and 1 states or any other number of an infinite set of superposition states of an individual qubit. Control instructions must be available for these in-between states as well.

The concept of a global clock to change the state of a quantum computer is a self-imposed design decision and is not a reality at the qubit control level. Qubits continue to evolve naturally regardless of the artificial clocking regime. It is theorized that imposing a digital clock also will reduce the performance of a quantum computer to the slowest qubit in the system.

### BRIEF DESCRIPTION OF THE DRAWINGS

A better understanding of the present invention can be obtained from the following detailed description in conjunction with the following drawings, in which:
FIGS. 1A-1F illustrate various views of an example quantum dot device, in accordance with one embodiment;
FIG. 2 illustrates one embodiment of a processor pipeline for processing quantum and non-quantum instructions;
FIG. 3 illustrates an embodiment of front-end circuitry of a processor for processing quantum and non-quantum instructions;
FIGS. 4A & 4B illustrate embodiments of a quantum-classical processor interface;
FIG. 5 illustrates views of qubits which show a stream of quantum operations;
FIGS. 6A-B illustrate an embodiment of a many-core and/or many-multiprocessor architecture for executing quantum instructions;
FIG. 7 illustrates one embodiment of a layered quantum execution architecture;
FIG. 8 illustrates the quantum control stack exposed as a multiprocessor/multithreaded device;
FIG. 9 illustrates one embodiment of a quantum compiler with support for a high level language;
FIG. 10 illustrates additional details of a compiler including different back ends;
FIG. 11 illustrates an example intermediate representation (IR) for quantum operations;
FIG. 12 illustrates an embodiment which includes a virtual machine runtime and a quantum runtime;
FIG. 13 illustrates one embodiment of a scalar dispatcher implementation; and
FIG. 14 illustrates an example calibration using a Rabi measurement sweep.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### INTRODUCTION

A quantum computer uses quantum-mechanical phenomena such as superposition and entanglement to perform computations. In contrast to digital computers which store data in one of two definite states (0 or 1), quantum computation uses quantum bits (qbits), which can be in superpositions of states. Qbits may be implemented using physically distinguishable quantum states of elementary particles such as electrons and photons. For example, the polarization of a photon may be used where the two states are vertical polarization and horizontal polarization. Similarly, the spin of an electron may have distinguishable states such as "up spin" and "down spin."

Qbit states are typically represented by the bracket notations |0〉 and 11). In a traditional computer system, a bit is exclusively in one state or the other, i.e., a '0' or a '1.' However, qbits in quantum mechanical systems can be in a superposition of both states at the same time, a trait that is unique and fundamental to quantum computing.

Quantum computing systems execute algorithms containing quantum logic operations performed on qubits. The sequence of operations is statically compiled into a schedule and the qubits are addressed using an indexing scheme. This algorithm is then executed a sufficiently large number of times until the confidence interval of the computed answer is above a threshold (e.g., ∼95+%). Hitting the threshold means that the desired algorithmic result has been reached.

Qbits have been implemented using a variety of different technologies which are capable of manipulating and reading quantum states. These include, but are not limited to quantum dot devices (spin based and spatial based), trapped-ion devices, superconducting quantum computers, optical lattices, nuclear magnetic resonance computers, solid-state NMR Kane quantum devices, electrons-on-helium quantum computers, cavity quantum electrodynamics (CQED) devices, molecular magnet computers, and fullerene-based ESR quantum computers, to name a few. Thus, while a quantum dot device is described below in relation to certain embodiments of the invention, the underlying principles of the invention may be employed in combination with any type of quantum computer including, but not limited to, those listed above. The particular physical implementation used for qbits is orthogonal to the embodiments of the invention described herein.

### QUANTUM DOT DEVICES

Quantum dots are small semiconductor particles, typically a few nanometers in size. Because of this small size, quantum dots operate according to the rules of quantum mechanics, having optical and electronic properties which differ from macroscopic entities. Quantum dots are sometimes referred to as "artificial atoms" to connote the fact that a quantum dot is a single object with discrete, bound electronic states, as is the case with atoms or molecules.

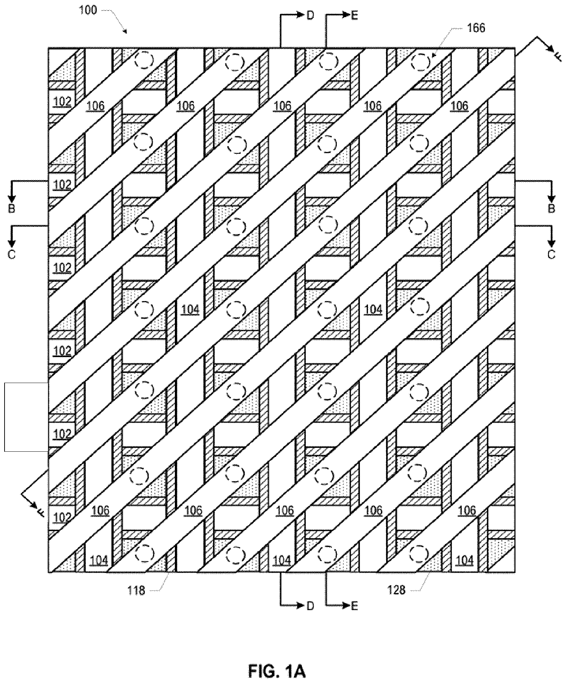

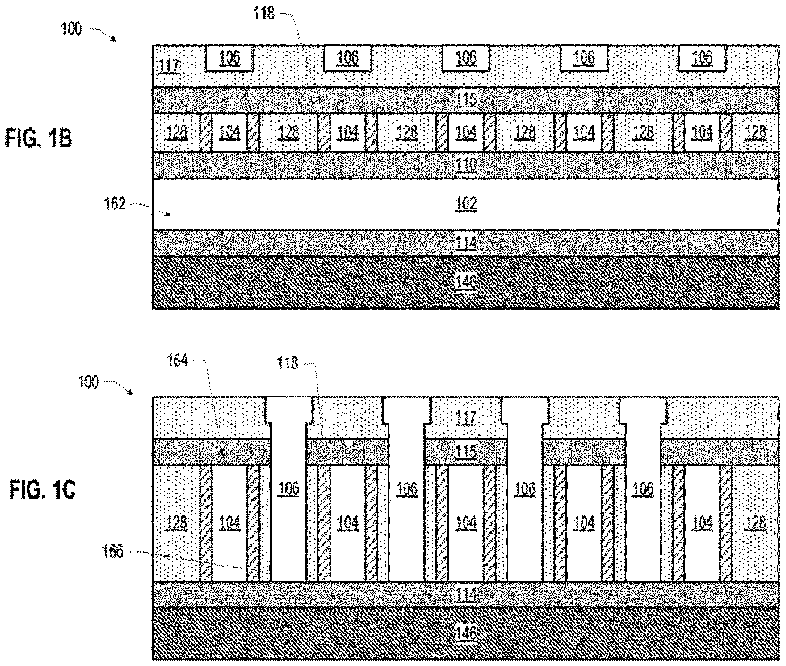

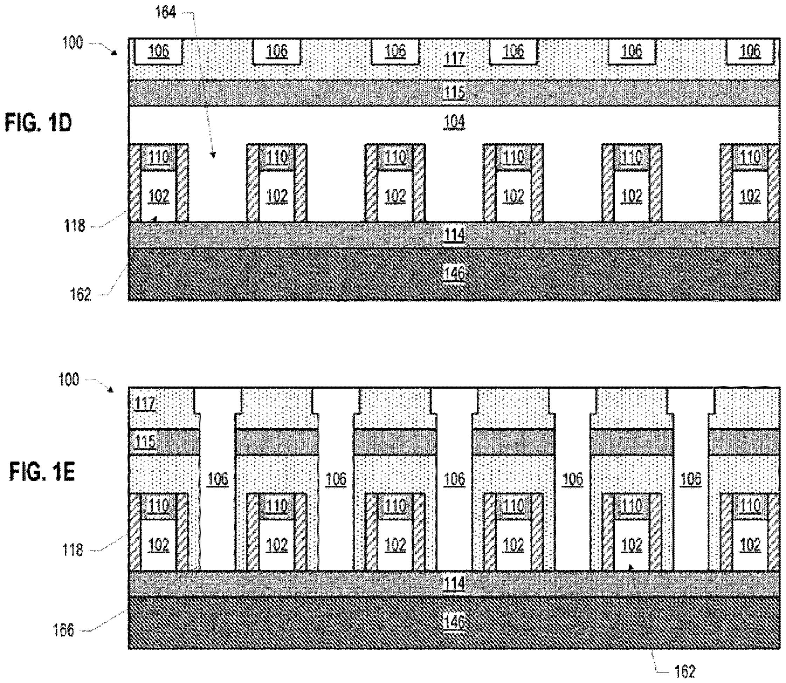

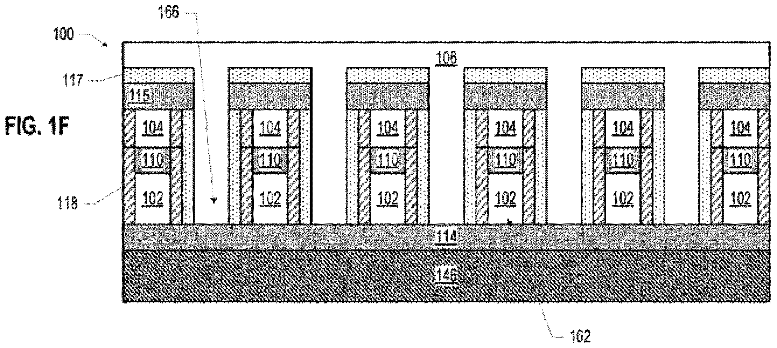

Figures 1A-1F are various views of a quantum dot device 100, which may be used with embodiments of the invention described below. **Figure** 1A is a top view of a portion of the quantum dot device 100 with some of the materials removed so that the first gate lines 102, the second gate lines 104, and the third gate lines 106 are visible. Although many of the drawings and description herein may refer to a particular set of lines or gates as "barrier" or "quantum dot" lines or gates, respectively, this is simply for ease of discussion, and in other embodiments, the role of "barrier" and "quantum dot" lines and gates may be switched (e.g., barrier gates may instead act as quantum dot gates, and vice versa). **Figures 1B-****1F** are side cross-sectional views of the quantum dot device 100 of **Figure 1A****;** in particular, **Figure 1B** is a view through the section B-B of **Figure 1A****,** **Figure 1C** is a view through the section C-C of Figure 1A, **Figure 1D** is a view through the section D-D of **Figure 1A****,** **Figure 1E** is a view through the section E-E of **Figure 1A****,** and **Figure 1F** is a view through the section F-F of **Figure 1A****.**

The quantum dot device 100 of **Figure 1** may be operated in any of a number of ways. For example, in some embodiments, electrical signals such as voltages, currents, radio frequency (RF), and/or microwave signals, may be provided to one or more first gate line 102, second gate line 104, and/or third gate line 106 to cause a quantum dot (e.g., an electron spin-based quantum dot or a hole spin-based quantum dot) to form in a quantum well stack 146 under a third gate 166 of a third gate line 106. Electrical signals provided to a third gate line 106 may control the electrical potential of a quantum well under the third gates 166 of that third gate line 106, while electrical signals provided to a first gate line 102 (and/or a second gate line 104) may control the potential energy barrier under the first gates 162 of that first gate line 102 (and/or the second gates 164 of that second gate line 104) between adjacent quantum wells. Quantum interactions between quantum dots in different quantum wells in the quantum well stack 146 (e.g., under different quantum dot gates) may be controlled in part by the potential energy barrier provided by the barrier potentials imposed between them (e.g., by intervening barrier gates).

Generally, the quantum dot devices 100 disclosed herein may further include a source of magnetic fields (not shown) that may be used to create an energy difference in the states of a quantum dot (e.g., the spin states of an electron spin-based quantum dot) that are normally degenerate, and the states of the quantum dots (e.g., the spin states) may be manipulated by applying electromagnetic energy to the gates lines to create quantum bits capable of computation. The source of magnetic fields may be one or more magnet lines, as discussed below. Thus, the quantum dot devices 100 disclosed herein may, through controlled application of electromagnetic energy, be able to manipulate the position, number, and quantum state (e.g., spin) of quantum dots in the quantum well stack 146.

In the quantum dot device 100 of Figure 1, a gate dielectric 114 may be disposed on a quantum well stack 146. A quantum well stack 146 may include at least one quantum well layer 152 (not shown in Figure 1) in which quantum dots may be localized during operation of the quantum dot device 100. The gate dielectric 114 may be any suitable material, such as a high-k material. Multiple parallel first gate lines 102 may be disposed on the gate dielectric 114, and spacer material 118 may be disposed on side faces of the first gate lines 102. In some embodiments, a patterned hardmask 110 may be disposed on the first gate lines 102 (with the pattern corresponding to the pattern of the first gate lines 102), and the spacer material 118 may extend up the sides of the hardmask 110, as shown. The first gate lines 102 may each be a first gate 162. Different ones of the first gate lines 102 may be electrically controlled in any desired combination (e.g., each first gate line 102 may be separately electrically controlled, or some or all the first gate lines 102 may be shorted together in one or more groups, as desired).

Multiple parallel second gate lines 104 may be disposed over and between the first gate lines 102. As illustrated in Figure 1, the second gate lines 104 may be arranged perpendicular to the first gate lines 102. The second gate lines 104 may extend over the hardmask 110, and may include second gates 164 that extend down toward the quantum well stack 146 and contact the gate dielectric 114 between adjacent ones of the first gate lines 102, as illustrated in **Figure 1D****.** In some embodiments, the second gates 164 may fill the area between adjacent ones of the first gate lines 102/spacer material 118 structures; in other embodiments, an insulating material (not shown) may be present between the first gate lines 102/spacer material 118 structures and the proximate second gates 164. In some embodiments, spacer material 118 may be disposed on side faces of the second gate lines 104; in other embodiments, no spacer material 118 may be disposed on side faces of the second gate lines 104. In some embodiments, a hardmask 115 may be disposed above the second gate lines 104. Multiple ones of the second gates 164 of a second gate line 104 are electrically continuous (due to the shared conductive material of the second gate line 104 over the hardmask 110). Different ones of the second gate lines 104 may be electrically controlled in any desired combination (e.g., each second gate line 104 may be separately electrically controlled, or some or all the second gate lines 104 may be shorted together in one or more groups, as desired). Together, the first gate lines 102 and the second gate lines 104 may form a grid, as depicted in Figure 1.

Multiple parallel third gate lines 106 may be disposed over and between the first gate lines 102 and the second gate lines 104. As illustrated in Figure 1, the third gate lines 106 may be arranged diagonal to the first gate lines 102, and diagonal to the second gate lines 104. In particular, the third gate lines 106 may be arranged diagonally over the openings in the grid formed by the first gate lines 102 and the second gate lines 104. The third gate lines 106 may include third gates 166 that extend down to the gate dielectric 114 in the openings in the grid formed by the first gate lines 102 and the second gate lines 104; thus, each third gate 166 may be bordered by two different first gate lines 102 and two different second gate lines 104. In some embodiments, the third gates 166 may be bordered by insulating material 128; in other embodiments, the third gates 166 may fill the openings in the grid (e.g., contacting the spacer material 118 disposed on side faces of the adjacent first gate lines 102 and the second gate lines 104, not shown). Additional insulating material 117 may be disposed on and/or around the third gate lines 106. Multiple ones of the third gates 166 of a third gate line 106 are electrically continuous (due to the shared conductive material of the third gate line 106 over the first gate lines 102 and the second gate lines 104). Different ones of the third gate lines 106 may be electrically controlled in any desired combination (e.g., each third gate line 106 may be separately electrically controlled, or some or all the third gate lines 106 may be shorted together in one or more groups, as desired).

Although Figures 1A-F illustrate a particular number of first gate lines 102, second gate lines 104, and third gate lines 106, this is simply for illustrative purposes, and any number of first gate lines 102, second gate lines 104, and third gate lines 106 may be included in a quantum dot device 100. Other examples of arrangements of first gate lines 102, second gate lines 104, and third gate lines 106 are possible. Electrical interconnects (e.g., vias and conductive lines) may contact the first gate lines 102, second gate lines 104, and third gate lines 106 in any desired manner.

Not illustrated in Figure 1 are accumulation regions that may be electrically coupled to the quantum well layer of the quantum well stack 146 (e.g., laterally proximate to the quantum well layer). The accumulation regions may be spaced apart from the gate lines by a thin layer of an intervening dielectric material. The accumulation regions may be regions in which carriers accumulate (e.g., due to doping, or due to the presence of large electrodes that pull carriers into the quantum well layer), and may serve as reservoirs of carriers that can be selectively drawn into the areas of the quantum well layer under the third gates 166 (e.g., by controlling the voltages on the quantum dot gates, the first gates 162, and the second gates 164) to form carrier-based quantum dots (e.g., electron or hole quantum dots, including a single charge carrier, multiple charge carriers, or no charge carriers). In other embodiments, a quantum dot device 100 may not include lateral accumulation regions, but may instead include doped layers within the quantum well stack 146. These doped layers may provide the carriers to the quantum well layer. Any combination of accumulation regions (e.g., doped or non-doped) or doped layers in a quantum well stack 146 may be used in any of the embodiments of the quantum dot devices 100 disclosed herein.

### APPARATUS AND METHOD FOR A

### HYBRID CLASSICAL QUANTUM COMPUTER

After Richard Feynman asked in 1982 whether quantum physics could be simulated efficiently using a quantum computer, much effort researching for a quantum computer has been focused on its universality and its efficiency over classical computation. One such example is David Deutsch's quantum Turing machine in 1985 that can be programmed to perform any computational task that can be performed by any physical object.

In contrast to theories and algorithms, quantum physical machines are in still their infancy. Efforts to build quantum information processing systems have resulted in modest success to date. Small quantum computers, capable of performing a small set of quantum operations on a very few qubits, represent the state of the art in quantum computation. In addition, quantum states are fragile in the sense that quantum states only remain coherent for a limited duration. This gap between algorithms and physical machines has driven the effort to invent hybrid classical-quantum algorithms. Some recent quantum algorithm developments have focused on short-depth quantum circuits to carry out quantum computations formed as subroutines embedded in a larger classical optimization loop, such as the variational eigensolver (P. J. J. O'Malley, 2016). Quantum languages, tools, and flows have been developed, providing software layers/stacks to translate and optimize applications to the quantum physical layer to cope with the stringent resource constraints in quantum computing (Frederic T. Chong, 2017, 14 September).

On the hardware side, classical computers have been used to perform error correction for quantum computations. The "quantum co-processor" model is the most favorable prevailing execution model where a classical CPU controls a quantum processing unit in a similar manner to how CPUs in modern computer systems interact with GPUs. As described in (X.Fu, 2016, May) and (X. Fu, 2018), the microarchitecture for experimental superconducting quantum co-processors included features such as an arbiter on the code fetch data path to steer classical instruction to host CPU and quantum instruction to quantum co-processor, an exchange register file to synchronize register files between host CPU and the quantum co-processor, and a quantum instruction cache.

The microarchitectures for these mechanisms, however, are not well defined and explicit support for hybrid classical-quantum programs is lacking. Consequently, it is unclear how a quantum co-processor would be implemented within a quantum computer, particularly one which is required to run a diverse set of quantum programs. A flexible and programmable model has yet to be developed for executing hybrid classical-quantum algorithms.

One embodiment of the invention adds a set of quantum instructions to an instruction set architecture (ISA) of a processor such as a CPU. By way of example, these instructions may be included in an extension to the ISA (e.g., such as the AVX-512 extensions for the x86 platform). In addition, in one embodiment, a quantum engine is added to the processor's execution unit and the new quantum instructions are fetched, decoded, scheduled, and executed on the functional units of the quantum engine. In one embodiment, the quantum engine interacts with the classical execution engines using a shared register file and/or system memory. Upon executing the quantum instructions (or quantum uops in certain embodiments described herein), the quantum execution engine generates control signals to manipulate the state of the qubits within the quantum processor. The quantum engine also executes instructions to take a measurement of specified sets of qubits and store the results. In these embodiments, a quantum/classical interface provides connectivity between the quantum engine of the classical processor and the quantum processor.

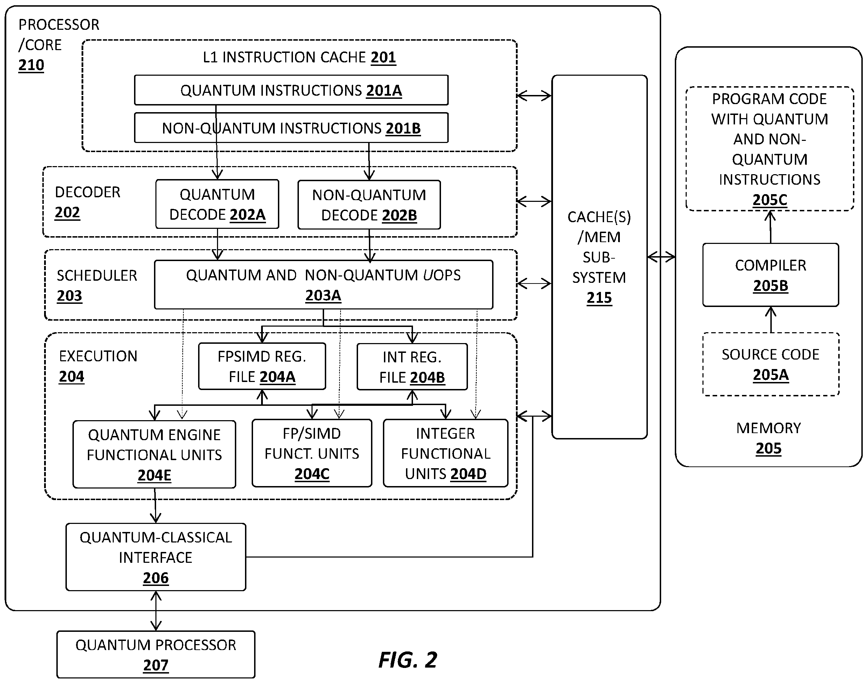

**Figure 2** illustrates one embodiment of a processor or core 210 which fetches, decodes, and executes quantum instructions 201A and non-quantum instructions 201B, utilizing the same pipeline resources as the non-quantum instructions 201B. The processor/core 210 of this embodiment supports quantum extensions to an existing ISA of the processor/core 210 (e.g., extending the ISA to include the quantum instructions 201A). Program code 205C comprising the quantum and non-quantum instructions is generated by a compiler 205B from source code 205A written by a programmer (e.g., utilizing the extended ISA). Various source/program code examples are provided below.

Quantum and non-quantum instructions 201A-B are fetched from memory 205 at the front end of the instruction pipeline and stored in a Level 1 (L1) instruction cache 201. Instructions and data may also be stored within a Level 2 or Level 3 cache within a cache/memory subsystem 215, which manages memory requests and cache coherency.

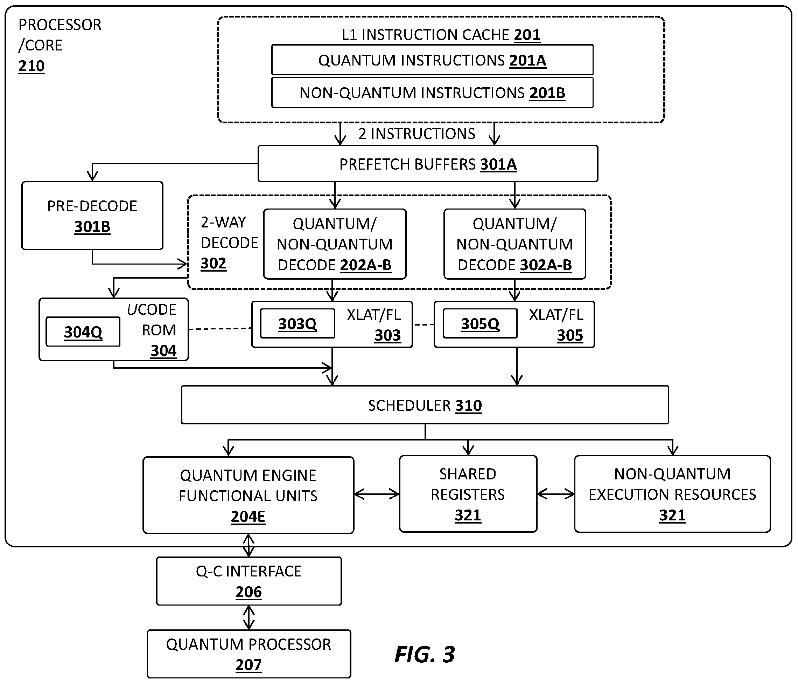

A decoder 202 decodes the instructions 201A-B into microoperations or *u*ops 203A which are scheduled for execution by a scheduler 203 and executed by execution circuitry 204. In one embodiment, certain stages of the pipeline are enhanced to include hardware support for processing the quantum instructions 201B while other stages are unaltered. For example, quantum decode circuitry 202A may be added to the decoder 202 for decoding the quantum instructions 201A, just as non-quantum decode circuitry 202B decodes non-quantum instructions 201B. Although illustrated as separate components in **Figure 2** for the purpose of explanation, the quantum decode circuitry 202A and non-quantum decode circuitry 202B may comprise a common or overlapping set of circuitry and/or microcode. For example, in one embodiment, an existing decoder may be extended to include microcode support for quantum instructions (e.g., in microcode ROM) to generate new sets of quantum *u*ops. The decoder 202 includes other decode circuitry such as a set of decode table structures (see, e.g., **Figure 3** and associated text), depending on the processor architecture.

In one embodiment, the decoder 202 generates a sequence of *u*ops 203A in response to decoding the instructions 201A-B. In an implementation with quantum and non-quantum instructions, the uops may include a mixture of quantum *u*ops and non-quantum *u*ops, which are then scheduled for execution by an instruction scheduler 203.

The quantum and non-quantum *u*ops 203A generated by the decoder 202 may initially be queued for execution within one or more *u*op queues of the scheduler 203, which dispatches the uops from the *u*op queue(s) in accordance with dependencies and/or execution resource availability. The embodiments of the invention may be implemented on various different types of processors with different types of schedulers. For example, in one embodiment, a set of execution "ports" couple the scheduler 203 to the execution circuitry 204, where each execution port is capable of issuing uops to a particular set of functional units 204C-E. In the example architecture shown in **Figure 2****,** for example, SIMD and floating point (FP) uops may be issued by the scheduler 203 over a FP/SIMD execution port coupled to a set of FP/SIMD functional units 204C and integer uops may be issued over an integer port coupled to a set of integer functional units 204D. While only two types of non-quantum functional units are shown for simplicity, the processor/core 210 may include various other/additional non-quantum functional units (e.g., such as load/store address generation units, branch units, additional SIMD and integer units, etc).

In the particular embodiment shown in Figure 2, the quantum engine functional units 204E share the same set of register files 204A-B used by the legacy processor functional units 204C-D. In this particular example, the register files 204A-B include a FP/SIMD register file 204A which stores floating point and SIMD operands used by the FP/SIMD functional units 204C and an integer register file 204B which stores integer operands for the integer functional units 204D. In one implementation, the FP/SIMD register file 204A comprises 512 bit vector registers and the integer register file 204B comprises 64-bit scalar registers. Of course, different processor architectures will use different types of registers shared by the quantum engine functional units 204E. Various other types of registers may also be used such as a set of control/status registers and mask registers.

In an embodiment in which quantum uops are mixed with non-quantum uops, the quantum uops are issued over one or more quantum ports to a set of quantum engine functional units 204E, which execute the quantum uops to perform the underlying quantum operations. For example, the quantum engine functional units 204E, in response to the quantum uops, may generate control signals over a quantum-classical interface 206 to manipulate and take measurements of the qubits of a quantum processor 207.

The quantum-classical interface 206 includes digital-to-analog (D-A) circuitry to convert the digital quantum control signals generated by the quantum engine functional units 204E to analog signals required to control the quantum processor 207 (e.g., such as the codeword triggered pulse generation (CTPG) units and Arbitrary Waveform Generator (AWG) described below) and also includes analog-to-digital (A-D) circuitry to convert the physical qubit measurements to digital result data.

In one embodiment, the quantum-classical interface 206 is integrated on the same semiconductor chip as the other components of the instruction processing pipeline (e.g., the execution circuitry 204, scheduler 203, decoder 202, etc). As discussed in detail below, different types of circuit/logic components may be used depending on the particular physical implementation of the quantum processor 207.

**Figure 3** illustrates one embodiment in which quantum instruction processing support is added to a low power processing pipeline including a pre-decode buffer 301B, a 2-way decoder 302 with dual sets of quantum/non-quantum decoder circuitry 202A-B, 302A-B, dual lookup tables for instruction translation (XLAT), and a *u*code ROM 304. In one embodiment, the XLAT components 303, 305 and *u*code ROM 304 are extended to support the quantum instructions, as indicated by logic blocks 303Q-305Q. The pre-decode buffer 301B detects and marks macro-instruction boundaries prior to full decoding into *u*ops by the 2-way decoder 302.

The operands for the quantum and non-quantum *u*ops are stored in a set of shared registers 321 (as described above) and accessed by the quantum functional units 320 when executing the *u*ops. The Q-C interface 320, in response to the quantum *u*ops, controls the operation of the quantum processor 207.

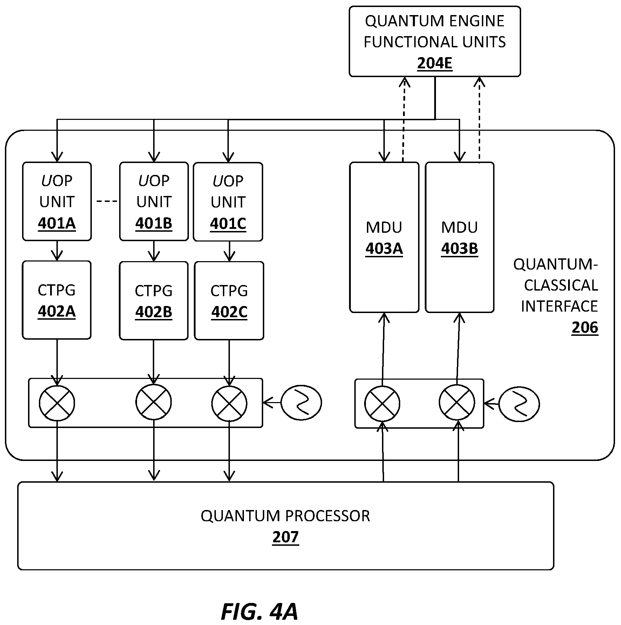

Different examples of a quantum-classical interface 206 are illustrated in **Figures 4A-B**. The Q-C interface 206 in **Figure 4A** includes a plurality of uop units 401A-C which, responsive to the uops executed by the quantum engine functional units 204E, generate codewords to control operation of a plurality of codeword triggered pulse generation (CTPG) units 402A-C. In response, the CTPG units 402A-C generate sequences of pulses to control the qubits of the quantum processor 207. Once the quantum processor 207 has reached a specified execution state, quantum measurements are taken by one or more of the measurement discrimination units (MDUs) 403A-B.

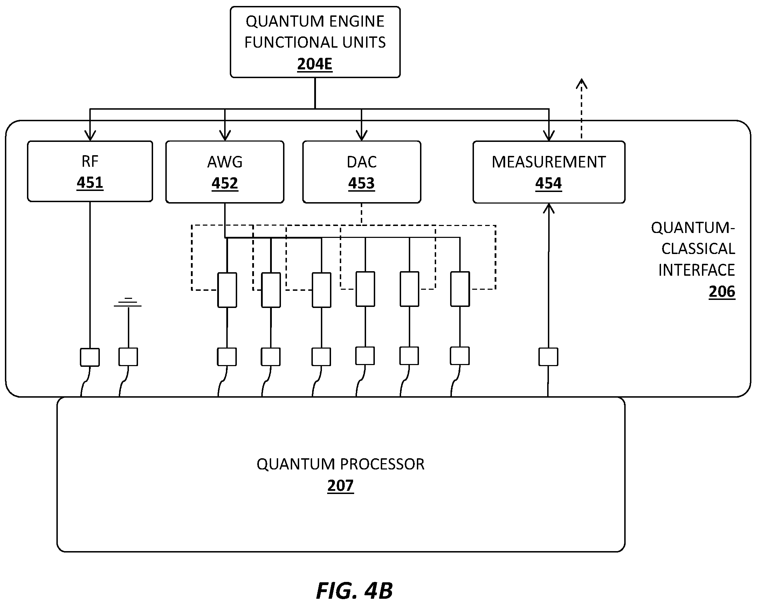

The Q-C interface 206 shown in **Figure 4B** includes a set of components to perform microwave complex signal generation including an RF microwave unit 451, a multi-channel Arbitrary Waveform Generators

(AWG) 452, one or more digital to analog converters (DACs) 453 and one or more measurement units 454. In one embodiment, the input to each of these components comprises a set of codewords generated by the quantum engine functional units 204E and the output is an analog waveform which manipulates the state of the qubits of the quantum processor 207. The measurement units 454 measure a current state associated with one or more qubits at a designated point in execution.

### PARALLEL STREAMING APPARATUS AND METHOD FOR A FAULT TOLERANT QUANTUM COMPUTER

At the scale of thousands of physical qubits organized into hundreds of logical qubits, quantum computations may require a modular control architecture. By decomposing the control operations in a modular manner, however, it becomes difficult to coordinate the individual qubit gate operations.

Embodiments of the invention include a modular control scheme structured to process a reasonable number of qubits for each controller and provide asynchronous coordination of the qubit operations across each module and between all connected qubits. As such, these embodiments solve the problem of global clock synchronization, multi-qubit operations in a modular architecture, and scalability of the system to larger numbers of qubits.

In one implementation, each qubit is implemented as a natural clock frequency and histogram of quantum operations that must occur over the lifetime of the computation. The only time that qubit operations need to synchronize between controllers is when a multi-qubit quantum operation such as a CNOT gate, SWAP gate, or CPHASE gate or a multi-qubit measurement is requested across some number of physical qubits. Otherwise, the system may run asynchronously with no digital clock.

Consequently, in one embodiment, thousands or even millions of qubits are organized and integrated within a multi-core, multi-processor architecture. Each processor includes a set of controllers responsible for the RF or laser pulse generation of each qubit. Each core of a processor may include one or several controllers, each of which includes a pipeline of quantum instructions or microoperations for each qubit. In one implementation, RF and/or laser pulse generation is performed at the highest rate that each individual qubit supports.

In one implementation, a local shared memory at each processor core synchronizes multi-qubit operations and associated measurements within that core and between the controllers managed by that core. A global shared memory coordinates inter-processor synchronization for multi-qubit operations which occur across multiple processing cores.

The system scales in a modular way until the communication latency between processor cores disallows further scaling or the qubits become too heated and can no longer operate at the current control pulsing rate.

The embodiments described herein alleviate the major architectural bottlenecks to scaling a quantum computer to a large number of controlled physical qubits. In particular, in the described embodiments, there is no longer a need for global clock synchronization or a single centralized controller orchestrating the actions on a large number of qubits. By not limiting the entire system to the speed of the slowest qubit in the system, the number of quantum logic gates which can be executed is dramatically increased.

In addition, embodiments of the invention reduce the complexity of the hardware design by treating each qubit as a stream of instructions executed over time and only synchronizing when multi-qubit operations are required. Moreover, these embodiments provide a natural architecture to realize quantum error correction schemes and fault tolerant operation of the quantum computer.

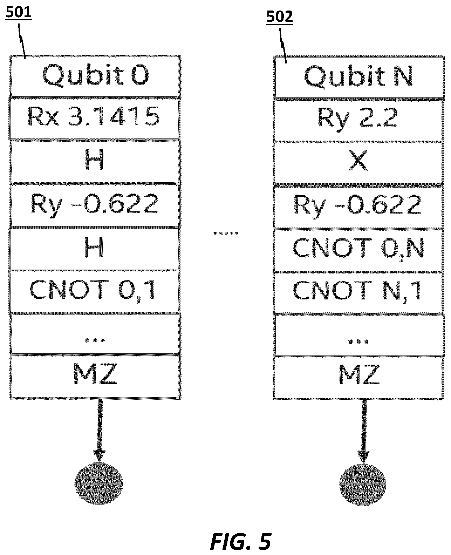

**Figure 5** illustrates a view of qubits 501-502 from an atypical perspective. In particular, each qubit 501-502 is not viewed as an individual atom, electron, or Majorana particle that has unitary operators periodically applied to it and is measured to determine its probabilistic state. Instead, **Figure 5** illustrates each qubit 501-502 as comprising a stream of quantum operations which are applied to it over its useful lifetime (e.g., rotation operations Rx, Ry, controlled NOT (CNOT) operations, etc). Viewed in this manner, a qubit is a thread of execution with a very deep pipeline.

From this vantage point, it can be seen that a quantum program fragment, quantum algorithm, and/or quantum application is really just a single thread or group of threads carrying out their individual operations with the end result being a qubit measurement (MZ). As such, a natural architectural choice from the classical computing world is that of a "stream" processor, "data parallel" processor, or "vectorization" processor. Current graphics processors take advantage of these types of massively parallel architectures to process graphics images and various forms of general purpose computing on GPU (GPGPU) operations.

The classical-quantum analogy is not perfect, however, due to the fact that these processors typically execute a single operation across multiple data elements (e.g., single instruction multiple data (SIMD) or single instruction multiple thread (SIMT) operations). Because a quantum computing operation is applied to an individual qubit or pair of qubits, there is far less data-level parallelism to exploit. However, for nearer-term applications in quantum materials science and quantum chemistry, there is a significant amount of instruction-level parallelism which may benefit from these architectures.

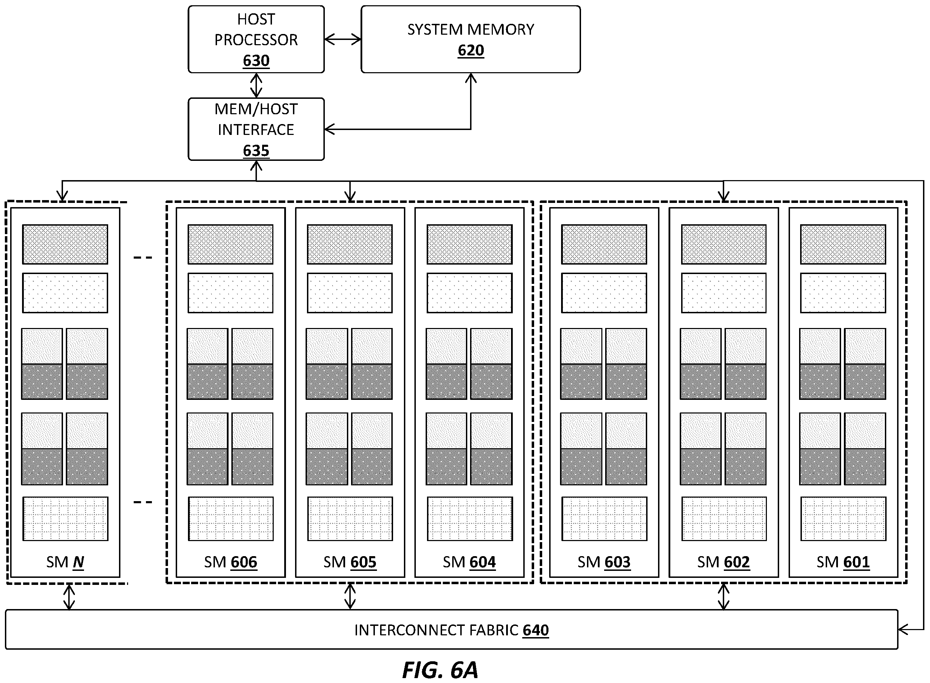

Thus, one embodiment of the invention comprises a many-core and/or many-multiprocessor architecture, one example of which is illustrated in **Figures 6A-B**. Briefly, this embodiment comprises a plurality of streaming multiprocessors (SMs) 601-606, N, each capable of simultaneously executing a plurality of quantum execution threads to control a corresponding plurality of qubits in one or more quantum processors 207. In this embodiment, blocks of qubits in the quantum processor 207 are formed and viewed as blocks of threads in each SM 601-606, N. As mentioned, in one embodiment, each SM 601 is capable of executing an instruction stream per qubit with hardware control constraints. The SMs 601-606, N are coupled over an interconnect fabric 640 to one another and a host processor 630 and system memory 620 via a memory/host interface 635.

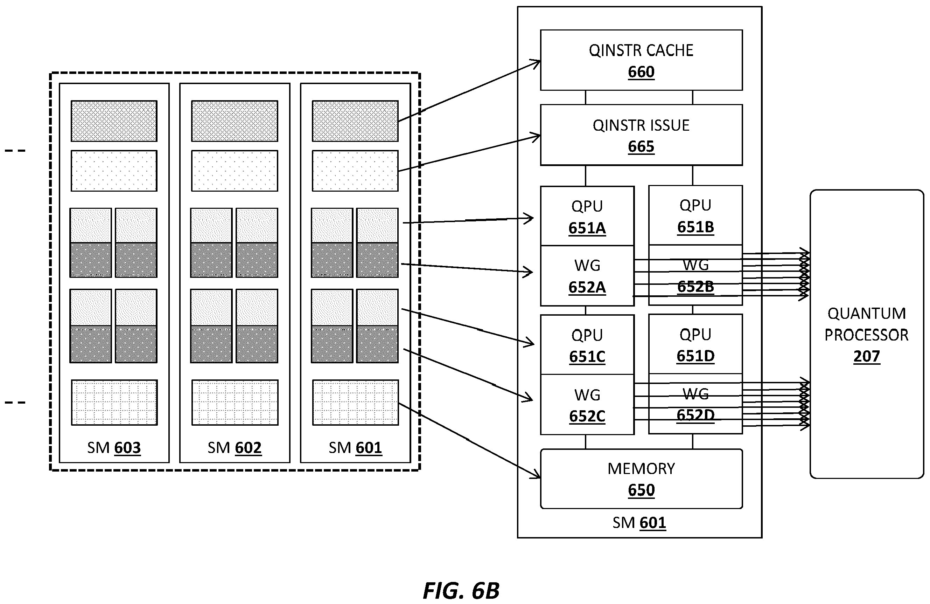

As shown in **Figure 6B****,** each streaming multiprocessor (SM) 601 comprises an instruction cache 660 to store quantum instructions fetched from system memory 620 via the interconnect fabric 640. The interconnect fabric 640 may be a point-to-point interconnect such as Quickpath Interconnect (QPI), Ultrapath Interconnect (UPI), or the Scalable Data Fabric (SDF). However, the underlying principles of the invention are not limited to any particular interconnect or fabric type.

In one embodiment, a quantum instruction issue unit 665 reads instructions of the various threads from the instruction cache 660 and issues the instructions to a plurality of quantum processing units (QPU) 651A-D. In one embodiment, each QPU comprises a quantum execution core with resources for executing the quantum instructions and/or quantum microoperations. In particular, a QPU executes a set of one or more quantum operations specified by each quantum instruction, generating control signals to control a corresponding wave generation (WG) unit 652A-D, which performs the physical manipulation of the qubits targeted by each operation.

In one embodiment, the instruction issue unit 665 includes one or more decoders to decode the quantum instructions into a plurality of quantum microoperations, which are then issued to the quantum processing units 651A-D. Alternatively, each quantum processing unit 651A-D may include instruction decode circuitry to decode the instructions and generate the quantum microoperations. Regardless of where decoding occurs (or even if decoding is needed), the quantum microoperations are executed by the QPUs 251A-D which responsively control the WG units 652A-D. In one embodiment, the quantum instruction issue unit 665 issues instructions for each thread at each global clock cycle.

A global scheduler may initially schedule the quantum instructions for execution across the various SMs 601-606, N based on detected instruction/operation dependencies (e.g., attempting to group instructions in an SM which are to be executed as a group). One example of the scheduler is provided below. The order of instruction execution and associated dependencies may be detected by the scheduler and/or a quantum compiler (also described below). The global scheduler may be implemented in software, hardware, or any combination thereof.

In one implementation, each wave generation (WG) unit 652A-D includes analog signal generation circuitry to generate RF/laser pulses directed to one or more of the qubits of the quantum processor 207 in response to control signals from the quantum processing units 651A-D. In one embodiment, each quantum processing unit 651A-D performs simultaneous microoperation execution for 32 threads, sending control signals to each corresponding WG unit 652A-D. However, the underlying principles of the invention are not limited to any particular number of executed threads.

In one embodiment, each WG unit 652A-D comprises N transmitters, each capable of transmitting at M frequencies to provide control for N x M qubits. For example, in one implementation, N = 4 and M = 32 to provide control of 32 qubits. However, different WG units with various other configurations may be used. In one embodiment, at least some of the WG units 652A-D include multi-channel direct digital synthesis (DDS) circuitry to simultaneously control a large number of qubits.

Moreover, different types of WG units may be used within a single SM 601 (e.g., some with DDS circuitry and some without), resulting in a heterogeneous arrangement of qubit control circuitry. In this embodiment, the quantum instruction issue unit 665 is aware of the different capabilities of each QPU/WG unit combination and issues microoperations accordingly, ensuring that each combination is not overloaded with operations. In one implementation, each WG 652A-D and/or QPU 651A-D is implemented on a discrete package which may be plugged into a socket, interconnect or bus structure. In this implementation, new QPUs/WG units may be added to scale up the processing capabilities of the SM 601, either in place of older QPUs/WG units or in unoccupied slots/interconnects.

Each SM 601 includes a local memory 650 which may be subdivided into shared region which is shared and accessible to all other SMs 602-606, N and a private or non-shared region which is only available to local QPUs 651A-D. In a shared virtual memory environment, the SMs 601-606, N access data in the system memory 620 and the various local memories 650 using the same virtual memory addresses, which are translated to physical memory addresses by one or more memory management units (not shown).

In one embodiment, quantum operations are divided into fragments and each fragment is then mapped to a group of qubit threads, which are executed independently of one another. Thus, in one embodiment, the division of quantum microoperations into fragments and fragments to qubit threads is performed, at least in part, based on detected dependencies between the microoperations. These dependencies may be determined statically by a compiler prior to execution and/or may be determined dynamically at runtime (e.g., by scheduling logic within the quantum instruction issue unit 665).

This embodiment may readily accommodate tiled architectures for quantum error correction such as Surface Code, Color Codes, or BCS Planar codes by allocating thread blocks for each tile and executing the error correction cycle on a multiprocessor or thread group per tile.

In one embodiment, each SM 601-606, N comprises a set of vector registers shared by one or more QPUs 651A-D which are subdivided into a plurality of lanes based on the instruction currently being executed. For example, each physical 1024-bit vector register may be partitioned into thirty-two 32-bit lanes or sixteen 64-bit lanes. Note, however, that the underlying principles of the invention are not limited to any particular arrangement/partitioning of registers.

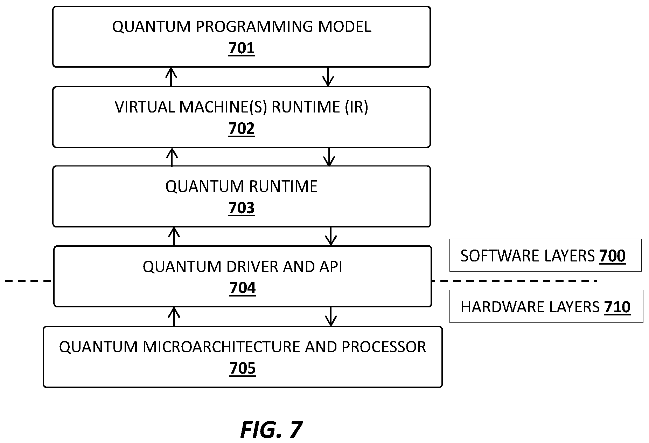

As illustrated in **Figure 7****,** a layered architecture is implemented in one embodiment which reduces complexity to the minimal set of constraints that can be satisfied at each layer. For example, one embodiment of the quantum programming model 701 allows the quantum programmer to work at the level of logical quantum operations embedded in a familiar language environment such as C, C++, Python, etc, without consideration of the underlying qubit topology in the quantum microarchitecture and processor 705.

While the embodiments of the invention allow a programmer to directly code to the underlying hardware constraints by pinning each thread to a specific physical qubit, they are free to program without this knowledge and trust that the various layers 701-704 will translate their algorithm correctly to the available hardware 705. From the quantum programmer's viewpoint, the machine model is that of a multithreaded/multiprocessor system. This virtual machine model is accompanied by a set of quantum gate operations exposed as an intermediate representation of an ISA for the virtual machine.

A specific use case will be provided to illustrate the general programming and execution model before describing the specifics of each layer. First, a quantum Programmer writes "kernels" of cQASM in the host language (C, C++, Python, etc). The kernel is translated by a compiler to an LLVM IR or ICQPX representation 702 suitable for parallel thread execution on the virtual machine (VM) model of a quantum processor (e.g., a modified-SPIE architecture in one embodiment). The virtual gate set is as low as possible without loss of generality. The ICQPX representation is then compiled to the ISA of the target native SM processor ISA. The native processor ISA is configured as high as possible without loss of specificity. This layer represents the ISA of the actual machine hardware.

Quantum run-time (QRT) 703 requests thread assignments from the quantum processor driver API 704 for each qubit as well as ring buffer resource locations, memory alignments, data widths, sync barriers, and sets these up for program execution. The QRT 703 loads the natively compiled kernel into all DMA queues and the processor begins executing when the kernel instructions are loaded into the ring buffer queues and the head/tail pointers diverge. Each qubit thread executes a single instruction in parallel through a global clocking and synchronization signal (cycle). Multiple qubit operations (CCNOT, CNOT, etc...) of qubit threads are co-located on the same QMS (Quantum Multiprocessor Stream) and coordinate multi-qubit operations through synchronization between threads using a local shared memory 650 or across QMSs using the interconnect shared memory space.

Qubit measurements are issued to each qubit stream as the final instruction in the stream. The measurement arbiter gathers all measurement instructions across the threads and then triggers the measurement process on a measurement cycle. The programmer then receives the results and the program terminates.

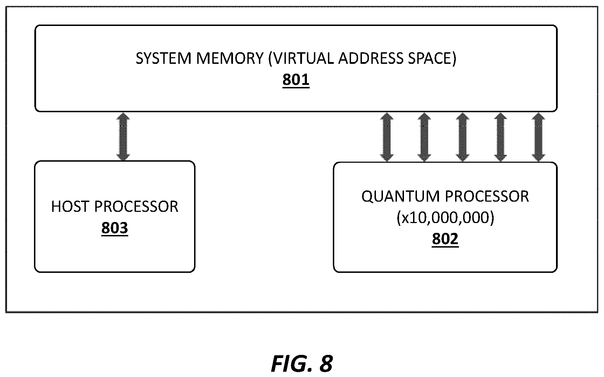

Thus, the top of the quantum computer system stack looks like any other general purpose stream processor with special quantum instructions and the programmer does not need to consider the hardware that executes the virtual model underneath, unless they want that degree of control. As illustrated in Figure 8, the quantum control stack (QCS) is exposed as a multiprocessor/multithreaded device comprising a host processor 803 and quantum processor 802 sharing a virtual address space of a system memory 801 (such as with a GPGPU implementation).

Referring again to **Figure 7****,** the driver and API 705 at the bottom of the software stack 700 include the details of interacting with the hardware 705 within the hardware layers 710 to execute the scheduled code from the virtual machine layer 702 and quantum runtime layer 703. This includes OS drivers, control electronics setups and configurations including calibration of the system, and all the other necessary pieces required to control and measure qubits. As mentioned, the quantum programmer does not need to know the details of this layer.

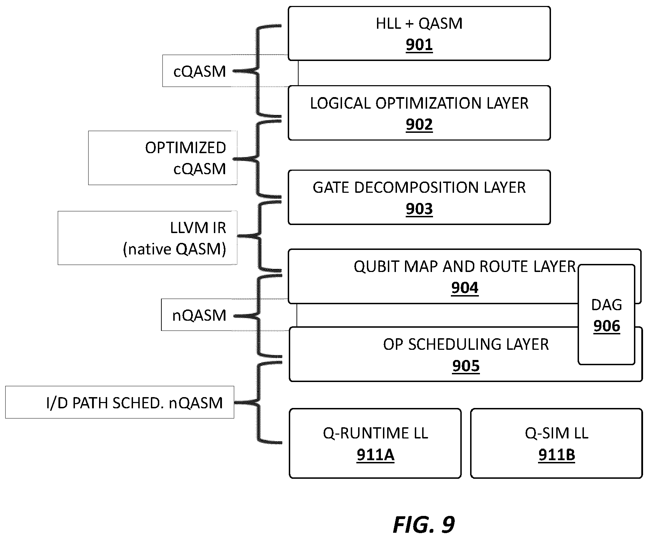

**Figure 9** illustrates one embodiment of a quantum compiler which includes support for a high level language 901 such as C, C++, Msft Q#, OpenQL, ProjectQ, and Python, intermixing both classical computing instructions such as loop constructs, branches (if-then-else), data format conversion, and scalar operations as well as quantum operations at the logical qubit level (common QASM, QASM, OpenQASM, etc).

For the architectures described herein, it is less important what language is used to form the mix of classical and quantum instructions and more important that it can be mapped efficiently to the underlying threading model of the virtual machine. The quantum programmer may write the intermediate language directly in the HLL language as well further controlling and optimizing their algorithm to the underlying hardware.

A logical optimization layer 902 evaluates and optimizes the HLL 901 including the QASM components to generate optimized cQASM code. As used herein, cQASM comprises a common QASM language, the first version of which is described in Khammassi, et al, cQASM v1.0: Towards a Common Quantum Assembly Language. Gate decomposition layer 903 parses and evaluates the optimized cQASM code to generate a representation of the underlying quantum gates to be executed on the quantum hardware. in one embodiment, an intermediate representation is used such as LLVM IR which uses native QQSM code.

Qubit map and route layer 904 maps qubits of the quantum processor to the physical (or virtual) qubits of the quantum processor and operation scheduling layer 905 schedules quantum operations for execution on the qubits. In one embodiment, the qubit map and route layer 904 is provided with data related to the physical arrangement of qubits in the quantum processor in order to render mapping decisions. In addition, both the qubit map and route layer 904 and operation scheduling layer 905 may construct and/or utilize Directed Acyclic Graph (DAG) 906 specifying data and/or resource dependencies between the quantum gate operations. The operation schedule is specified in a quantum runtime level language 911A, a quantum simulator level language 911B, or one or more other quantum execution language types such as the Intel CC Gen1 LL and the Python PycQED LL.

In one embodiment, the layered architecture illustrated in Figure 9 processes the quantum instructions as targets for an accelerator or coprocessor such as the quantum execution engines described above (e.g., the QPUs 651A-D and quantum engine functional units 204E). Consequently, quantum instructions are separated from classical instructions within the instruction processing pipeline and directed to different execution circuitry having separate control flow from the classical instructions.

In one embodiment, the output from the compilation phase above is the ICQPX intermediate representation and a control flow graph of the classical instruction mix suitable for execution on the underlying virtual machine. Multiple program "kernels" can thus be passed to the virtual machine layer in order to execute the program written in the higher level language.

In one embodiment, the quantum compiler transforms the text file representing the quantum program by separating the quantum and classical instructions and grouping them according to their execution targets. It then performs qubit mapping (904) and scheduling (905) to the underlying constraints of the control electronics, qubit topology connectivity, or any other rules that require the code to transform such as gate inversions or rotation decomposition.

In one implementation, the quantum compiler performs optimizations at each stage of the compilation in an attempt to improve gate coherence. By way of example, optimizations may include selecting more error-free operations instead of noisy operations, reordering commutative gates or sequences of gates to better match the hardware capabilities, and any other architecture-specific or qubit specific optimizations. The compiler may also perform scheduling of the quantum operations to the qubits.

One implementation comprises a greedy parallel scheduler within the operation scheduling layer 905 which takes the inherently serial quantum program instructions in program order and converts them into a version that can be scheduled on independent execution threads within the SMs 601-606, N in **Figure 6A-B**. Consequently, a quantum circuit that was originally written as individual operations on individual quantum bits in the program can be grouped into highly instruction-level-parallel operations.

In standard QASM, the specification of parallel blocks of quantum instructions is not provided. In one embodiment, the parallel scheduler within the operation scheduling layer 905 produces a parallel representation of each code block so that the virtual machine can execute each qubit schedule with maximum parallelism.

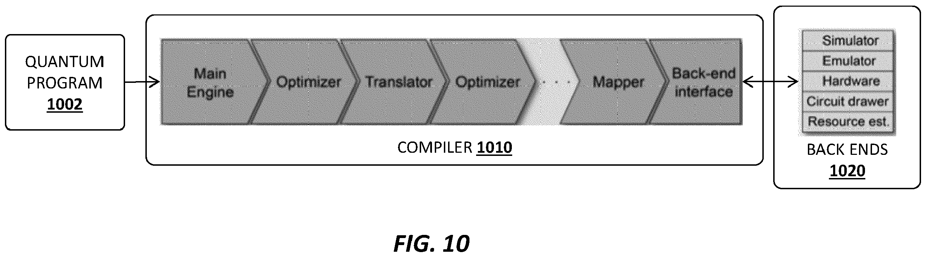

As illustrated in **Figure 10****,** one embodiment of the compiler 1010 compiles a quantum program 1002 in a series of optimization and scheduling phases before finally outputting the intermediate representation for the virtual machine environment (e.g., the VMM).

The back-end interface of the compiler 1010 represents the encoding of the quantum circuit to a block or threads in the virtual machine as well as conversion to the text-formatted human readable intermediate representation and hand-off to the virtual machine layer. The compiler 1010 may adjust compilation based on the back end target 1020, examples of which include quantum simulators, quantum emulators, quantum hardware (e.g., a physical quantum processor), quantum circuit specifications, and quantum processing resources.

Quantum logic operations flow from one layer of the quantum compiler 1010 to the next. At each layer, the code is transformed in some way to both optimize and convert it to a more convenient gate set or form for the next engine in the compiler to consume and re-emit. Data flows from one engine to the next until the fully scheduled logical QASM is correctly structured for the next layer in the architecture.

Exit is achieved when correctly formed intermediate representation (IR) (e.g., LLVM IR or ICQPX IR code in one embodiment) is emitted by the compilation stage. A malformed IR that cannot be read/processed by subsequent stages results in an exception condition and/or exit.

The purpose of the IR layer is to provide an intermediate language representation for quantum computing that matches a particular multi-processor and multi-threaded execution engine (see, e.g., Figures 6A-B). In one embodiment, the execution engine includes a virtualization layer such as a virtual machine, but the underlying principles of the invention are not limited to a virtualized environment. In one embodiment, the IR goes beyond mere parallelization of QASM. Instead, it extends to a language that is capable of being embedded in any quantum programming language and called directly from software tools.

A programmer can write a framework that targets the IR and be assured that it can run on any hardware platform for quantum computing that we create which is IR friendly. This isolates the programs written above this layer from the hardware dependencies and details necessary to execute the quantum schedule through the rest of the stack.

This layer also allows for new instruction set architectures to be devised for quantum computing without being married to QASM or other definitions of QASM code. The IR can be extended to new language constructs as well as new ways of intermixing quantum and classical instructions without being tied to a specific competitor's or researcher's variant on quantum assembly language.

In one embodiment, the IR binary virtual machine model is implemented to run within the virtual machine layer 702 illustrated in Figure 7. This layer provides an abstraction for a multi-processor/multi-threaded device such as the parallel computing architecture shown in Figures 6A-B. In one embodiment, a multi-threaded ISA is used which is as close to the underlying hardware as possible while remaining hardware agnostic. The IR is compiled to a binary format capable of execution on the underlying virtual machine runtime 702. Therefore, its only purpose is to define the binary objects that represent specific quantum operations that it receives in the instruction stream.

In one embodiment, the quantum runtime 703 executes the IR code (or a translated version thereof) on the underlying quantum processor 705 via a quantum driver and API 704. The quantum runtime is responsible for direct hardware resource management through the quantum processor device driver 704 including qubit allocation, reallocation, and deallocation as well as thread scheduling to the individual hardware processing queues. For example, the quantum runtime may implement the schedule generated by the operation scheduling layer 905 of the compiler 1010 and may allocate and deallocate quantum resources, abstracting the underlying hardware complexities and execution timing constraints from all of the layers residing above it.

Beneath the quantum runtime, the quantum driver and API 704 handles the hardware and instruction setup and streaming independently from the quantum runtime 703. If the underlying hardware control box or some other type of system contains multiple quantum controller devices each with a different device driver instance, such as a bank of 4 quantum controllers on a PCIE bus inside of a server system, then the quantum virtual machine runtime 702 and/or quantum runtime 703 enumerates each device and configures resources for each one. The relevant layer also sends instructions to them each in the manner and at the frequency in which they are expected.

In one embodiment, the quantum driver layer 704 provides device level access to quantum resources through an OS driver stack. The quantum driver 703 defines an interface (quantum device driver interface or QDDI) for allocating qubits, enumerating resources such as circular ring buffers for quantum instructions, publishing the underlying qubit connectivity topology, and handling synchronization between the hardware device resources and the upper layer virtual machine model.

In a heterogeneous computing system, each quantum processor unit shows up as a PCI-E device and is enumerated through a standard search procedure. In this implementation, the Base Address Register (BAR) is mapped into MMIO space for configuration and I/O from the host CPU.

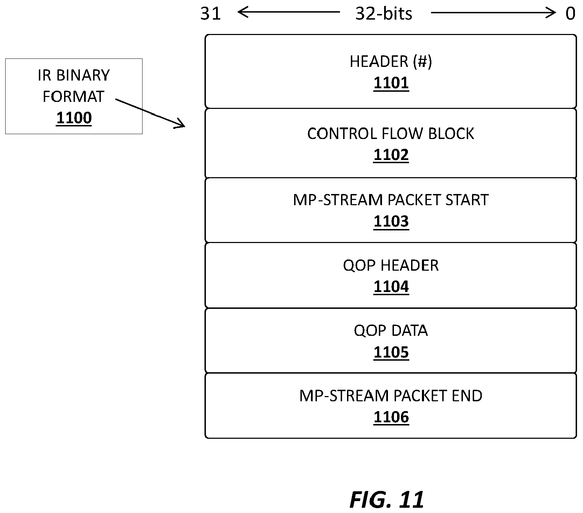

**Figure 11** illustrates an example IR binary structure 1100 which is 32 bits wide to communicate quantum operations between layers. The IR binary structure 1100 includes a header 1101 with a unique identification code and/or sequential number (i.e., to specify an ordering relative to other IR binary structures).

In addition, one embodiment includes a control flow block 1102 comprising data which specifies relationships between quantum operations and/or other control flow information. For example, one embodiment of the control flow block comprises a portion of a directed acyclic graph (DAG) specifying an order of quantum operations.

In one implementation, the IR binary structure 1100 includes a quantum operation header 1104 and data 1105 specifying the quantum operations to be performed and the values to be used and qubits for performing the quantum operations (e.g., as in the quantum microinstructions described herein). The QOP header and data 1104-1105 are bounded by an MP-stream packet start indicator 1103 and an MP-stream packet end indicator 1106.

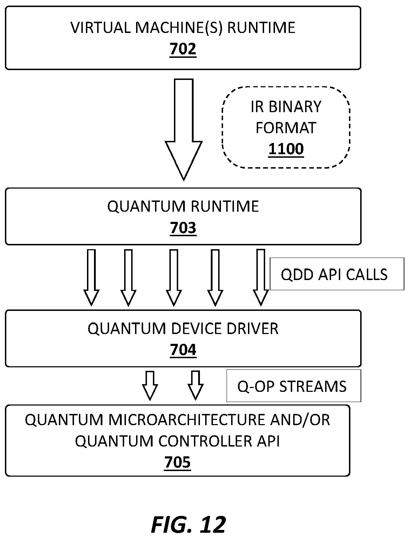

As illustrated in **Figure 12****,** the VM runtime 702 may pass the IR binary format 1100 to the quantum runtime 703 to specify each quantum operation. The quantum runtime 703 then extracts the relevant data and code required to execute the specified quantum operation, making calls to the quantum device driver 704 as needed. The quantum device driver 704, in response to the calls, sends quantum operation streams to the quantum microarchitecture specifying the quantum operations to be performed. In one implementation, the quantum operation streams are formatted in accordance with a quantum controller API. In response, the quantum controller or multiple quantum controllers perform the underlying quantum operations.

In one embodiment, the virtualized architecture described above with respect to **Figures 7-12** is implemented on a many-core and/or many-multiprocessor architecture such as described above with respect to **Figures 6A-B**. While the following description outlines one possible manner of execution, the underlying principles of the invention are not limited to this particular arrangement.

The embodiment in **Figures 6A-B** models a modern general purpose streaming processor or a multicore vector processor such as the Xeon Phi. A single thread in this architecture comprises operations performed on a single qubit and each such thread can be grouped with other threads and executed on one or more processor cores or SMs 601-606, N.

This provides a natural grouping of quantum operations that are friendly to future quantum error correction strategies as a single processor core or SM may operate the error correction cycle for any number of qubits (threads). Interactions between SMs 601-606, N and/or QPUs 651A-D are performed through a shared object memory 650, which locally and globally provides a way to coordinate interactions. In addition, cache line coherence protocols are used in one implementation to maintain synchronization between the quantum thread tile engines throughout operation.

One specific implementation of the SM-based architecture comprises a scalar register-based ISA in which each SM 601 includes a multi-threaded instruction unit 665 and associated instruction cache 660 for processing instructions from multiple threads (directed to multiple qubits of the quantum processor 207). This implementation may support any number of threads based on available QPUs 651A-D and other instruction processing resources (e.g., 128, 192, 384, 512, etc, concurrent threads).

One embodiment uses an in-order instruction execution pipeline with a hardware scheduler. The hardware scheduler may be external to the SMs 601-606, N (e.g., to schedule instructions across multiple SMs) and/or may be integral to each SM (e.g., such as within the quantum instruction issue unit 665 or another front end component).

In one embodiment, the SMs support reduced precision IEEE 754 32-bit format, although various additional data formats may be used. In addition, the QPUs 651A-D and/or WGs 652A-D of one embodiment include quantum native gate support for various quantum gate operations (e.g., rotations such as Rx, Ry, Rz; controlled gates such as cZ; and swap gates such as iSWP). In addition, the QPUs 651A-D and/or WGs 652A-D may include hardware support for Pauli frame tracking.

In one implementation, the local memory 650 comprises a 1K memory which may be shared among components within the SM 601 (e.g., the QPUs 651A-D) and components from other SMs 602-606, N. However, various other memory sizes may be used depending on the implementation (e.g., 2k, 128k, 512k, etc). In one embodiment, multi-qubit gate synchronization is performed among threads via shared memory objects stored within the shared local memory 650.

In one embodiment, each SM 601 supports a specified number of qubits (e.g., 128, 192, 384, 512, etc, qubit capacity per SM). However, the particular number of qubits supported may depend on the capabilities of the underlying quantum processor 207 and the WG 652A-D interfaces.

Organization of multiple SMs 601-606, N as described herein results in a system capable of maximum parallel operation along with the scalability to expand to potentially thousands or even millions of qubits. In one embodiment, the QPUs 651A-D of each SMs 601 comprise very low power cores using a classical core architecture for processing quantum instructions.

As mentioned, in one embodiment, each WG unit 652A-D comprises N transmitters, each capable of transmitting at M frequencies to provide control for N x M qubits. For example, in one implementation, N = 4 and M = 32 to provide control of 32 qubits. However, different WG units with various other configurations may be used. For example, at least some (or all) of the WG units 652A-D include multi-channel direct digital synthesis (DDS) circuitry to synthesize waveforms to simultaneously control a large number of qubits.

In one particular implementation, each WG unit 652A-D includes a control chip capable of x32 qubit operations. Therefor an SM with 4 such chips can drive 128 qubits simultaneously. In this configuration, only ten SMs are needed to drive 1000 qubits.

Thus, the hardware and software of the embodiments described above are modular and inherently scalable, allowing individual software layers and hardware components to be added or removed without compromising the overall operation of the system. Additionally, with tight interfaces between each software layer, the ability to design new tools or adapt existing ones to interact with each layer is enhanced.

### A SCALABLE QUANTUM DISPATCHER

Running quantum algorithms requires a controller to schedule and dispatch a large number of parallel operations. As such, simplicity is a necessity for scalability. On the other hand, qubit calibrations may need to be performed over time. It is thus desirable that the control processor support both usage models.

Existing designs such as Delft's CC-lite/full provide flexible, accurate calibrations, but are costly to scale from both an area and a power/thermal perspective. These systems specify quantum circuit timing for every instruction in a quantum program, construct an execution timeline from the quantum circuit timing, and implement label comparators, one per channel, to determine if an operation from a channel can be dispatched according to the timing queue and global timer.

In particular, this embodiment groups gate latencies (e.g., 1q, 2q) which are configured based on usage needs. In one embodiment, the calibrations performing sweeps over time based on the variable gate latencies. In contrast, existing implementations typically execute with fixed gate latencies. During each scheduling cycle, the dispatcher determines whether to emit an operation from the operation FIFO's based on detected latencies and in-progress operations.

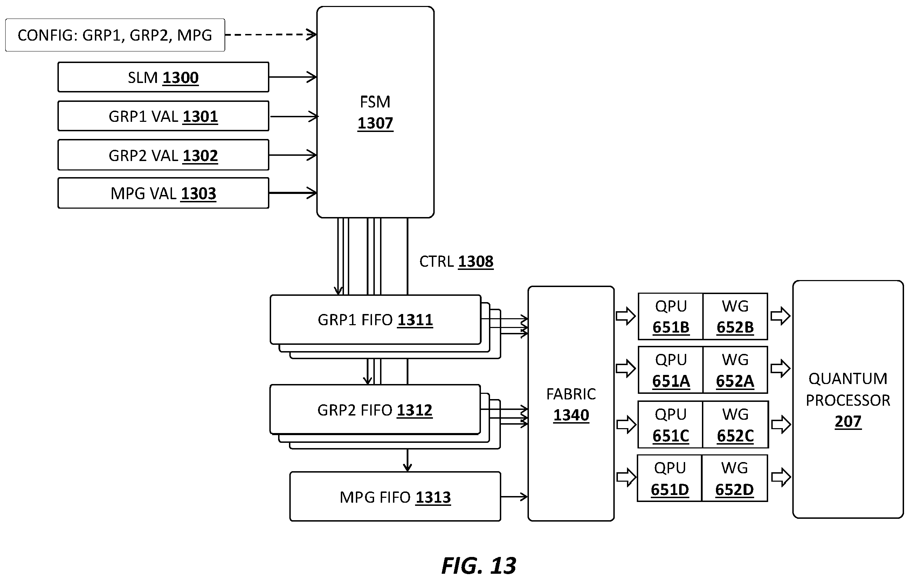

**Figure 13** illustrates one embodiment of an apparatus for performing flexible and accurate calibration operations which includes finite state machine 1307 to control input to the quantum processor 207 via a set of control signals 1308 applied to input FIFOs 1311-1313. In operation, the input to the FSM includes input data 1301-1303 specifying current status for operations with different gate latencies. In the illustrated example, this includes "Group1 valid" data 1301 for the 1q gates, "Group2 valid" data 1302 for the 2q gates, and MPG (measurement) valid data 1303. In one embodiment, these inputs are binary values. For example, GRP1 VAL 1301 is set if the slice contains a valid 1q gate and GRP2 VAL 1302 is set if the slice contains a valid 2q gate.

A 2-bit slice marker (SLM) is input to the FSM 1307 in one embodiment to indicate instructions at the beginning of a slice (01), the end of a slice (10), the beginning and end of a slice (11), or instructions in the middle of a slice (00). In one implementation, the MPG VAL input 1303 is a single bit which is set if the slice contains a valid qubit measurement. The FSM 1307 decodes GRP1 VAL 1301 and GRP2 VAL 1302 signals along with SLM 1300 on every emit clock tick. The table below shows a latency group example that FSM uses to control the rest of dispatcher logic.

**TABLE A**

| | **Qubit Type A** | **Qubit Type B** |
|---|---|---|
| **GRP1 (1q)** | 1 | 10 |
| **GRP2 (2q)** | 2 | 1 |
| **MPG** | 30 | 500 |

In this table, latency is expressed in terms of clock cycles, the Transmon clock cycle time is 20ns, and the spin clock cycle time is 100ns.

Based on this input, the FSM 1307 generates a set of control signals 1308, one of which may be an "emit next" signal to indicate the FIFO 1311-1313 from which the next quantum operation is to be emitted to the interconnect fabric 1340. The emitted operation is then routed to an appropriate quantum processing unit 651A-D which controls a corresponding waveform generator 652A-D to manipulate the state of the quantum processor 207 (e.g., to control one or more qubits).

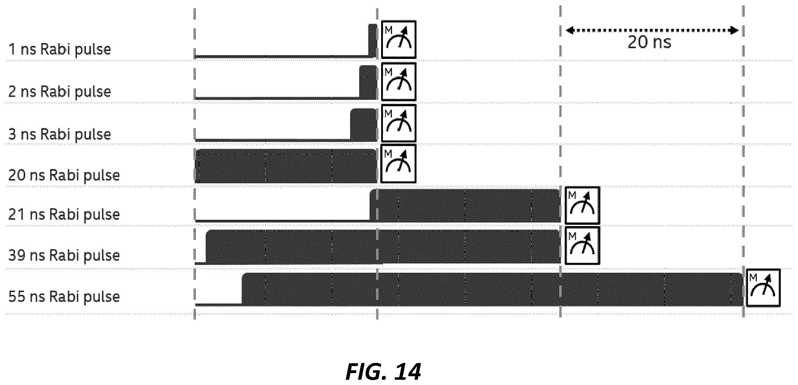

**Figure 14** illustrates a precise calibration example with a Rabi measurement sweep. This example involves a microwave pulse for a duration (t) followed by a measurement. The variable t could be swept in small steps (e.g. 1 ns), depending on user's requirements. The embodiments of the invention described above allow for precise sweeping while preserving grp1 latency 20 ns.

In the above detailed description, reference is made to the accompanying drawings that form a part hereof, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense.

Various operations may be described as multiple discrete actions or operations in turn in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments. Terms like "first," "second," "third," etc. do not imply a particular ordering, unless otherwise specified.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges. As used herein, the notation "A/B/C" means (A), (B), and/or (C).

The description uses the phrases "in an embodiment" or "in embodiments," which may each refer to one or more of the same or different embodiments. Furthermore, the terms "comprising," "including," "having," and the like, as used with respect to embodiments of the present disclosure, are synonymous.

### EXAMPLES

The following are example implementations of different embodiments of the invention.
Example 1. A processor comprising: a memory interface coupled to a system memory; and a plurality of streaming multi-processors, each streaming multiprocessor to execute a plurality of instruction streams in parallel, the instruction streams including quantum instructions, each streaming multiprocessor comprising: an instruction cache to store a first plurality of the quantum instructions fetched from the memory; instruction issue circuitry to dispatch each quantum instruction of the first plurality for execution; a plurality of parallel quantum execution circuits, each parallel quantum execution circuit to execute a subset of the first plurality of quantum instructions, two or more of the first plurality of quantum instructions to be executed in parallel by a corresponding two or more of the parallel quantum execution circuits; and a plurality of wave generators to receive signals from the plurality of parallel quantum execution circuits responsive to execution of each of the first plurality of quantum instructions, the wave generators to responsively generate analog waveforms to control qubits of a quantum processor.
Example 2. The processor of example 1 wherein each wave generator is to generate a wave to control one or more qubits in accordance with a corresponding quantum instruction executed by a parallel quantum execution circuit.
Example 3. The processor of example 1 wherein the instruction issue circuitry is to dispatch the first plurality of quantum instructions in an order based on data and/or resource dependencies between quantum instructions in the first plurality.
Example 4. The processor of example 3 wherein the data and/or resource dependencies are to be detected by a compiler and/or dynamically by the instruction issue circuitry.
Example 5. The processor of example 1 wherein each of the plurality of parallel quantum execution circuits is directly coupled to one of the plurality of wave generators, wherein a wave generator is to generate analog waveforms to control qubits based on signals received from a directly coupled parallel quantum execution circuit.
Example 6. The processor of example 1 further comprising: a plurality of registers to store operand values to be used by the plurality of parallel quantum execution circuits to execute the quantum instructions in the first plurality, wherein each quantum instruction comprises one or more operands to identify one or more of the operand values in a corresponding one or more of the plurality of registers.
Example 7. The processor of example 1 further comprising: a local memory and/or cache coupled to the plurality of parallel quantum execution circuits, the local memory and/or cache to store data to be used by the parallel quantum execution circuits during execution of the quantum instructions.
Example 8. The processor of example 1 wherein the subset of the first plurality of quantum instructions comprises one or more quantum measurement instructions, the processor further comprising: one or more measurement units to perform measurement of a qubit in accordance with the one or more quantum measurement instructions when executed by the parallel quantum execution circuits.
Example 9. The processor of example 1 wherein the memory interface is further coupled to a host processor, wherein the host processor is to execute one or more non-quantum instructions and responsively route the quantum instructions to the streaming multiprocessors in the plurality of instruction streams.
Example 10. A method comprising: generating a plurality of instruction streams including quantum instructions; scheduling a first instruction stream including a first plurality of the quantum instructions for execution on a first streaming multi-processor; dispatching the first plurality of quantum instruction of the first instruction stream for execution on a plurality of quantum execution circuits of the first streaming multi-processor, each quantum execution circuit to execute a subset of the first plurality of quantum instructions, two or more of the first plurality of quantum instructions to be executed in parallel by a corresponding two or more of the quantum execution circuits; and receiving signals from the plurality of quantum execution circuits by a plurality of wave generators responsive to execution of each of the first plurality of quantum instructions; and responsively generating analog waveforms to control qubits of a quantum processor.
Example 11. The method of example 10 wherein each wave generator is to generate a wave to control one or more qubits in accordance with a corresponding quantum instruction executed by a parallel quantum execution circuit.
Example 12. The method of example 10 wherein the first plurality of quantum instructions are to be dispatched in an order based on data and/or resource dependencies between quantum instructions in the first plurality.
Example 13. The method of example 12 wherein the data and/or resource dependencies are to be detected by a compiler and/or dynamically by an instruction dispatch circuit.
Example 14. The method of example 10 wherein each of the plurality of parallel quantum execution circuits is directly coupled to one of the plurality of wave generators, wherein a wave generator is to generate the analog waveforms to control qubits based on signals received from a directly coupled parallel quantum execution circuit.
Example 15. The method of example 10 further comprising: storing in a plurality of registers operand values to be used by the plurality of parallel quantum execution circuits to execute the quantum instructions in the first plurality, wherein each quantum instruction comprises one or more operands to identify one or more of the operand values in a corresponding one or more of the plurality of registers.
Example 16. The method of example 10 further comprising: storing data to be used by the parallel quantum execution circuits during execution of the quantum instructions in a local memory and/or cache coupled to the plurality of parallel quantum execution circuits.
Example 17. The method of example 10 wherein the first plurality of quantum instructions comprises one or more quantum measurement instructions to cause measurement of a qubit when executed by the quantum execution circuits.
Example 18. The method of example 10 further comprising: executing one or more non-quantum instructions and responsively routing the quantum instructions to the streaming multiprocessors.
Example 19. A machine-readable medium having program code stored thereon which, when executed by a machine, causes the machine to perform the operations of: generating a plurality of instruction streams including quantum instructions; scheduling a first instruction stream including a first plurality of the quantum instructions for execution on a first streaming multi-processor; dispatching the first plurality of quantum instruction of the first instruction stream for execution on a plurality of quantum execution circuits of the first streaming multi-processor, each quantum execution circuit to execute a subset of the first plurality of quantum instructions, two or more of the first plurality of quantum instructions to be executed in parallel by a corresponding two or more of the quantum execution circuits; and receiving signals from the plurality of quantum execution circuits by a plurality of wave generators responsive to execution of each of the first plurality of quantum instructions; and responsively generating analog waveforms to control qubits of a quantum processor.
Example 20. The machine-readable medium of example 19 wherein each wave generator is to generate a wave to control one or more qubits in accordance with a corresponding quantum instruction executed by a parallel quantum execution circuit.
Example 21. The machine-readable medium of example 19 wherein the first plurality of quantum instructions are to be dispatched in an order based on data and/or resource dependencies between quantum instructions in the first plurality.
Example 22. The machine-readable medium of example 21 wherein the data and/or resource dependencies are to be detected by a compiler and/or dynamically by an instruction dispatch circuit.
Example 23. The machine-readable medium of example 19 wherein each of the plurality of parallel quantum execution circuits is directly coupled to one of the plurality of wave generators, wherein a wave generator is to generate the analog waveforms to control qubits based on signals received from a directly coupled parallel quantum execution circuit.
Example 24. The machine-readable medium of example 19 further comprising program code to cause the machine to perform the operations of: storing in a plurality of registers operand values to be used by the plurality of parallel quantum execution circuits to execute the quantum instructions in the first plurality, wherein each quantum instruction comprises one or more operands to identify one or more of the operand values in a corresponding one or more of the plurality of registers.
Example 25. The machine-readable medium of example 19 further comprising program code to cause the machine to perform the operations of: storing data to be used by the parallel quantum execution circuits during execution of the quantum instructions in a local memory and/or cache coupled to the plurality of parallel quantum execution circuits.
Example 26. The machine-readable medium of example 19 wherein the first plurality of quantum instructions comprises one or more quantum measurement instructions to cause measurement of a qubit when executed by the quantum execution circuits.
Example 27. The machine-readable medium of example 19 further comprising program code to cause the machine to perform the operations of: executing one or more non-quantum instructions and responsively routing the quantum instructions to the streaming multiprocessors.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor comprising:
a memory interface coupled to a system memory; and
a plurality of streaming multi-processors, each streaming multiprocessor to execute a plurality of instruction streams in parallel, the instruction streams including quantum instructions, each streaming multiprocessor comprising:
an instruction cache to store a first plurality of the quantum instructions fetched from the memory;
instruction issue circuitry to dispatch each quantum instruction of the first plurality for execution;
a plurality of parallel quantum execution circuits, each parallel quantum execution circuit to execute a subset of the first plurality of quantum instructions, two or more of the first plurality of quantum instructions to be executed in parallel by a corresponding two or more of the parallel quantum execution circuits; and
a plurality of wave generators to receive signals from the plurality of parallel quantum execution circuits responsive to execution of each of the first plurality of quantum instructions, the wave generators to responsively generate analog waveforms to control qubits of a quantum processor.

2. The processor of claim 1 wherein each wave generator is to generate a wave to control one or more qubits in accordance with a corresponding quantum instruction executed by a parallel quantum execution circuit.

3. The processor of any of claims 1 to 2 wherein the instruction issue circuitry is to dispatch the first plurality of quantum instructions in an order based on data and/or resource dependencies between quantum instructions in the first plurality.

4. The processor of claim 3 wherein the data and/or resource dependencies are to be detected by a compiler and/or dynamically by the instruction issue circuitry.

5. The processor of any of claims 1 to 4 wherein each of the plurality of parallel quantum execution circuits is directly coupled to one of the plurality of wave generators, wherein a wave generator is to generate analog waveforms to control qubits based on signals received from a directly coupled parallel quantum execution circuit.

6. The processor of any of claims 1 to 5 further comprising:
a plurality of registers to store operand values to be used by the plurality of parallel quantum execution circuits to execute the quantum instructions in the first plurality, wherein each quantum instruction comprises one or more operands to identify one or more of the operand values in a corresponding one or more of the plurality of registers.

7. The processor of any of claims 1 to 6 further comprising:
a local memory and/or cache coupled to the plurality of parallel quantum execution circuits, the local memory and/or cache to store data to be used by the parallel quantum execution circuits during execution of the quantum instructions.

8. The processor of any of claims 1 to 7 wherein the subset of the first plurality of quantum instructions comprises one or more quantum measurement instructions, the processor further comprising:
one or more measurement units to perform measurement of a qubit in accordance with the one or more quantum measurement instructions when executed by the parallel quantum execution circuits.

9. The processor of any of claims 1 to 8 wherein the memory interface is further coupled to a host processor, wherein the host processor is to execute one or more non-quantum instructions and responsively route the quantum instructions to the streaming multiprocessors in the plurality of instruction streams.

10. A method comprising:
generating a plurality of instruction streams including quantum instructions;
scheduling a first instruction stream including a first plurality of the quantum instructions for execution on a first streaming multi-processor;
dispatching the first plurality of quantum instruction of the first instruction stream for execution on a plurality of quantum execution circuits of the first streaming multi-processor, each quantum execution circuit to execute a subset of the first plurality of quantum instructions, two or more of the first plurality of quantum instructions to be executed in parallel by a corresponding two or more of the quantum execution circuits; and
receiving signals from the plurality of quantum execution circuits by a plurality of wave generators responsive to execution of each of the first plurality of quantum instructions; and
responsively generating analog waveforms to control qubits of a quantum processor.

11. The method of claim 10 wherein each wave generator is to generate a wave to control one or more qubits in accordance with a corresponding quantum instruction executed by a parallel quantum execution circuit.

12. The method of any of claims 10 to 11 wherein the first plurality of quantum instructions are to be dispatched in an order based on data and/or resource dependencies between quantum instructions in the first plurality.

13. The method of claim 12 wherein the data and/or resource dependencies are to be detected by a compiler and/or dynamically by an instruction dispatch circuit.

14. The method of any of claims 10 to 13 wherein each of the plurality of parallel quantum execution circuits is directly coupled to one of the plurality of wave generators, wherein a wave generator is to generate the analog waveforms to control qubits based on signals received from a directly coupled parallel quantum execution circuit.

15. The method of any of claims 10 to 14 further comprising:
storing in a plurality of registers operand values to be used by the plurality of parallel quantum execution circuits to execute the quantum instructions in the first plurality, wherein each quantum instruction comprises one or more operands to identify one or more of the operand values in a corresponding one or more of the plurality of registers.
